# EUROPEAN PATENT APPLICATION

(11) **EP 4 755 688 A1**
(43) Date of publication of application: **10.06.2026**
(21) Application number: 25211993.8
(22) Date of filing: 29.10.2025
(51) Int. Cl.: B60K 35/231, B60K 35/50, B60R 16/02

(54) **HEAD-UP DISPLAY APPARATUS**

(30) Priority: 06.12.2024 KR 20240180180
(71) Applicant: Hyundai Mobis Co., Ltd., Gangnam-gu Seoul (KR)
(72) Inventor: KIM, Byung Ki, 16891 Yongin-si, Gyeonggi-do (KR)
(74) Representative: Jung, Minkyu

(57) **Abstract**

A head-up display (HUD) apparatus includes a housing including a lower case that is open at a top thereof and defines an internal space, and an upper case that corresponds to the lower case to cover the top of the lower case; a first connector forming a female structure configured to be coupled to a male connector inserted into the housing through a male-female coupling method; a cable extending from the first connector and configured to be connected to an external device; and a cable guide configured to surround at least a portion of the cable and to guide the cable to maintain a constant curvature.

## Description

### CROSS-REFERENCE TO RELATED APPLICATION

This application claims priority to and the benefit under 35 USC § 119(a) of Korean Patent Application No. 10-2024-0180180, filed on December 06, 2024, in the Korean Intellectual Property Office, the entire disclosure(s) of which is hereby incorporated herein by reference in its entirety for all purposes.

### TECHNICAL FIELD

The present disclosure relates to a head-up display apparatus. More particularly, the present disclosure relates to a head-up display apparatus that maintains the curvature of a cable connecting the head-up display apparatus and an external device.

### BACKGROUND

The content described in this section merely provides background information on the present disclosure and does not constitute the prior art.

A head-up display apparatus is an apparatus that displays an image containing information such as vehicle speed, remaining fuel, and navigation guidance on a front window of a vehicle, called a windshield. The head-up display apparatus is generally configured to reflect head-up display information projected from a picture graphic unit (PGU) through an aspherical mirror and display it on the windshield.

Further, when a driver's eye level changes, the head-up display apparatus is configured to adjust the height of the information displayed on the windshield by rotating the aspherical mirror to adjust the reflection angle of the aspherical mirror.

To implement these various functions, various electronic components are connected to the head-up display apparatus. A cable for power supply and signal transmission is used to connect these components, and the position and shape of the cable play an important role in the stable operation of the apparatus.

In the case that the cable extends to other components or a main body while being connected to a rear of the apparatus, the cable naturally takes on a bent shape. When such a bending occurs in the cable, excessive stress may be applied to the cable if an appropriate curvature radius is not maintained, which may lead to a decrease in the quality of internal signal transmission or cause physical damage.

In a conventional head-up display apparatus, an anchor portion is used to maintain a target curvature. However, even if the anchor portion is installed, it is difficult to maintain accurate curvature, and it is vulnerable to external factors such as vibration, increasing the possibility of communication errors. This problem may interfere with the accurate display of vehicle information while driving, leading to the risk of providing incorrect information to a driver or interruption in information delivery.

### SUMMARY

A head-up display apparatus according to an embodiment is to maintain the curvature of a copper cable by using a cable guide.

A head-up display apparatus according to an embodiment is to improve the vibration resistance of a copper cable by using a fixed cable guide.

The objectives to be achieved by the present disclosure are not limited to the above-mentioned objectives, and other objectives which are not mentioned will be clearly understood by those skilled in the art from the following description.

According to one general aspect, a head-up display (HUD) apparatus includes a housing including a lower case that is open at a top thereof and defines an internal space, and an upper case that corresponds to the lower case to cover the top of the lower case; a first connector forming a female structure configured to be coupled to a male connector inserted into the housing through a male-female coupling method; a cable extending from the first connector and configured to be connected to an external device; and a cable guide configured to surround at least a portion of the cable and to guide the cable to maintain a constant curvature.

In some embodiments, the cable guide may include a body portion configured to surround at least a portion of the first connector; an anchor portion configured to be disposed on one side of the lower case, to extend from one side of the body portion, and be fixedly attached to the lower case; and a curvature portion configured to maintain a radius of curvature of at least a portion of the cable extending from the first connector, and the curvature portion being formed on the other side of the body portion.

In some embodiments, the curvature portion may include a curvature groove formed along the radius of curvature of the cable, and wherein at least a portion of the cable is introduced into the curvature groove.

In some embodiments, the curvature groove may further include protrusions formed to face each other on at least a portion of both upper and lower sides of the curvature groove so that the cable is fitted into the curvature groove.

In some embodiments, the lower case may further include a guide configured to be disposed on one side of the lower case to guide fixation of the anchor portion, and the anchor portion may further include a penetration hole formed on one side of the anchor portion so that the guide penetrates therethrough.

In some embodiments, the apparatus may further include a plate extending from a side of the curvature portion, the body portion, and the anchor portion to support the cable guide.

In some embodiments, the apparatus may further include a second connector connected to the cable and forming a male structure configured to be coupled to a female connector of the external device through a male-female coupling method; and a holding portion configured to be disposed in one region on the other side of the lower case, and to secure the second connector to the lower case.

In some embodiments, the holding portion may include a sliding portion configured so that the second connector is slidably coupled thereto; an adsorber configured to extend from the sliding portion and adhere to the lower case; and a fastener extending from the adsorber and configured to be fastened through a fastening hole that is formed in one region on the other side of the lower case.

In some embodiments, the fastener may further include elastic protrusions formed on both sides of the fastener and configured to be fitted into the fastening hole.

In some embodiments, the lower case may further include a hook hanger configured to secure the cable between one side and the other side of the lower case.

### ADVANTAGEOUS EFFECTS

A head-up display apparatus according to an embodiment has the effect of minimizing communication failures by maintaining the curvature of a copper cable through a cable guide.

A head-up display apparatus according to an embodiment has the effect of improving vibration resistance by increasing resistance to motor vibration through a fixed cable guide.

### BRIEF DESCRIPTION OF THE DRAWINGS

Fig. 1 is a perspective view illustrating the configuration of a head-up display apparatus according to an embodiment of the present disclosure.
Fig. 2 is a sectional view taken along line A-A' of Fig. 1 to show a coupling relationship between a cable guide and a first connector.
Fig. 3 is a perspective view illustrating a head-up display apparatus including a hook hanger added to the embodiment of Fig. 1.
Fig. 4 is a sectional view taken along line B-B' of Fig. 1 to show a coupling relationship between a holding portion and a lower case.
Fig. 5 is a sectional view taken along line C-C' of Fig. 1 to show a head-up display apparatus including an elastic protrusion added to the embodiment of Fig. 4.

### DETAILED DESCRIPTION

Hereinafter, some embodiments of the present disclosure will be described in detail with reference to the accompanying drawings. It is to be noted that in giving reference numerals to components of each of the accompanying drawings, the same components will be denoted by the same reference numerals even though they are illustrated in different drawings. Further, in describing exemplary embodiments of the present invention, well-known functions or constructions will not be described in detail since they may unnecessarily obscure the understanding of the present invention.

Terms 'first', 'second', i), ii), a), b), and the like, will be used in describing components according to embodiments of the present disclosure. These terms are only for distinguishing the components from other components, and the nature, sequence, order, or the like of the components are not limited by the terms. Throughout the present specification, unless explicitly described to the contrary, "including" or "comprising" any components will be understood to imply the inclusion of other elements rather than the exclusion of any other elements.

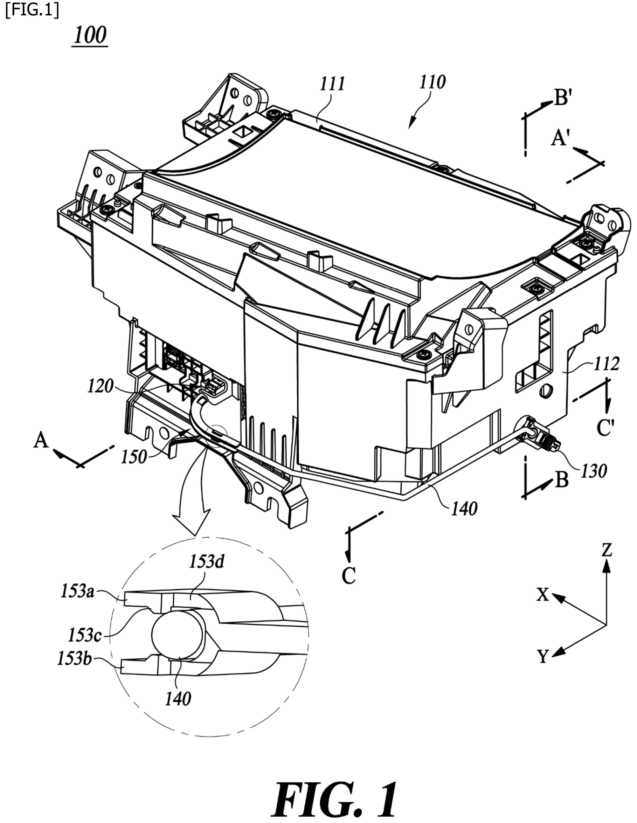

Fig. 1 is a perspective view illustrating the configuration of a head-up display apparatus according to an embodiment of the present disclosure.

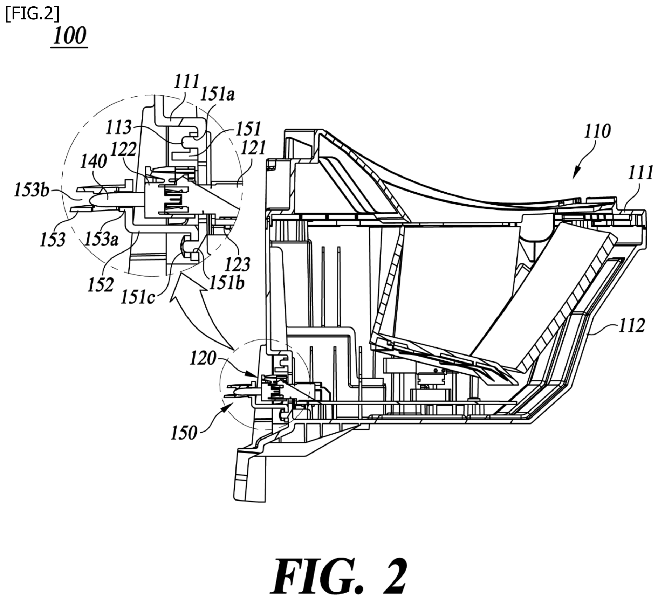

Fig. 2 is a sectional view taken along line A-A' of Fig. 1 to show a coupling relationship between a cable guide and a first connector.

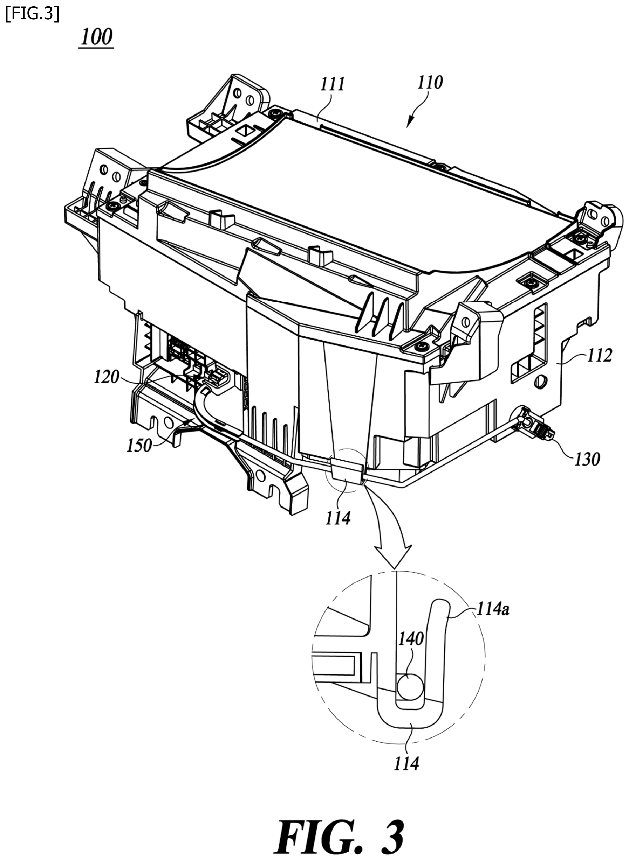

Fig. 3 is a perspective view illustrating a head-up display apparatus including a hook hanger added to the embodiment of Fig. 1.

Referring to Figs. 1 to 3, the head-up display apparatus 100 according to an embodiment of the present disclosure includes all or some of a housing 110, a first connector 120, a second connector 130, a cable 140, and a cable guide 150.

The housing 110 may include a lower case 112 and an upper case 111.

The lower case 112 may be configured to be open at a top thereof. The lower case 112 may define an internal space to accommodate various components of the head-up display apparatus 100.

The lower case 112 may be configured as a structure for combining various components of the head-up display apparatus 100 therein. For example, the lower case 112 may accommodate a plurality of components for displaying an image on a windshield, such as a picture generation unit or a driving module. The lower case may accommodate a male connector 121 and a board 123. However, this is an example configuration but is not necessarily limited thereto.

The upper case 111 may be configured to correspond to the lower case 112. The upper case 111 may be configured to cover the top of the lower case 112.

The upper case 111 may be coupled to an upper contour of the lower case 112 to form a closed area. That is, after various components of the head-up display apparatus 100 are installed in the lower case 112, the upper case 111 may be screwed to at least one coupling portion of the lower case 112, thereby completing the assembly of the head-up display apparatus 100.

The first connector 120 may form a female structure to be coupled to a male connector 121 inserted into the housing 110 through a male-female coupling method.

The male connector 121 may be disposed on a side of the board 123 disposed in the housing 110. The board 123 may include various elements. Various elements perform different functions and operate in interaction with each other. The board 123 may include a printed circuit board (PCB) on which an electronic element (not shown) such as a diode is mounted. The board 123 may include a microcontroller, a microprocessor, memory, an analog-to-digital converter (ADC), a digital-to-analog converter (DAC), a power management circuit, a signal processing circuit, and the like. However, this is an example configuration but is not necessarily limited thereto.

The male connector 121 may be introduced into the head-up display apparatus 100 mainly for power supply and data signal transmission. For example, the male connector 121 may be composed of a metal terminal and an insulator to maintain stable contact at a fixed position. However, this is an example configuration but is not necessarily limited thereto.

The first connector 120 has a pocket or groove 122 to accommodate a protruding portion of the male connector 121, thereby forming electrical contact.

A wire harness, as a part of the cable 140, may extend from the first connector 120 to provide a connection with an external device. The wire harness bundles multiple wires within the vehicle into a single bundle to transmit electrical signals and power, and may form an electrical connection with an external device, such as a head-up display controller, through the first connector.

The wire harness helps organize the arrangement of cables, allowing for efficient wiring work inside the vehicle, and can enhance durability against external impacts or vibrations.

An opening 116 may be formed on one side of the lower case 112 to allow the male connector 121 inserted into the lower case 112 to be coupled with the first connector 120. Specifically, the opening 116 may be formed to correspond to the first connector 120.

The lower case 112 may further include a guide 113. The guide 113 may be disposed in a first region. Here, the first region refers to a region formed in one area on one side of the lower case 112 and adjacent to the opening 116. The guide 113 may be disposed on one side of the lower case 112 to guide the fixation of an anchor portion 151, which will be described later. Specifically, the guide 113 may be formed to protrude in a direction parallel to the protruding direction of the male connector 121.

A first hole 151b may be formed in the first region to be coupled to the cable guide 150, which will be described later.

The second connector 130 may be connected to the extended cable 140 and may form a male structure to be coupled to a female connector (not shown) of an external device through the male-female coupling method. The second connector 130 may be configured to provide an electrical connection between the head-up display apparatus 100 and a head-up display controller (not shown).

The second connector 130 may contact the female connector 121 using a protruding metal pin to provide stable power supply and signal transmission.

The cable 140 may be configured to be extended from the first connector 120 and be connected to the external device. The cable 140 may be a FAKRA cable. Here, the term "FAKRA cable" refers to a cable used to transmit high-frequency signals or data within the vehicle, and may provide a stable signal supply from a main circuit of a specific device or system to a terminal device or branch point.

The cable guide 150 may be configured to surround at least a portion of the cable 140. The cable guide 150 may be configured to guide the cable 140 to maintain a constant curvature.

The cable guide 150 may include all or some of a body portion 152, an anchor portion 151, and a curvature portion 153.

The body portion 152 may be configured to surround at least a portion of the first connector 120. Specifically, the body portion 152 may include a receiving space into which the first connector 120 is introduced.

The anchor portion 151 may be positioned on one side of the lower case 112 to extend from one side of the body portion 152 and be fixedly attached to the lower case 112. Specifically, it may be positioned in the first region.

The anchor portion 151 may include a penetration hole 151a. The penetration hole 151a may be formed on one side of the anchor portion 151 so that the guide 113 penetrates therethrough. That is, the anchor portion 151 may be inserted into the guide 113 to guide and/or anchor the position of the anchor portion 151.

A second hole 151d corresponding to the first hole 151b may be formed on the other side of the anchor portion 151. A screw 151c may be fastened by penetrating the first hole 151b and the second hole 151d. Thus, the anchor portion 151 may be tightly fixed to the lower case 112.

The curvature portion 153 may be configured to maintain the radius of curvature of at least a portion of the cable 140 extending from the first connector 120. Here, the radius of curvature refers to a minimum allowable radius at which the cable 140 may be bent without compromising the mechanical and electrical properties of the cable 140.

As the curvature radius is maintained, the performance and lifespan of the cable 140 can be guaranteed. For example, in the case of a copper cable, the recommended curvature radius is typically 6 to 8 times the cable diameter. For an optical cable, it is necessary to maintain the curvature radius of more than 20 times the outer diameter. Therefore, in order to prevent damage to the cable 140, it is preferable to install the curvature portion 153 with a radius larger than the recommended curvature radius. This is an example configuration but is not necessarily limited thereto.

The curvature portion 153 may be configured to extend from the other side of the body portion 152 and then maintain the curvature radius. Thus, the curvature portion 153 may be formed to extend to a minimum range in which the curvature radius may be maintained.

The curvature portion 153 may include curvature grooves 153a and 153b. The curvature grooves 153a and 153b may be formed along the curvature radius of the cable 140.

At least a portion of the cable 140 may be introduced into the curvature grooves 153a and 153b to maintain the curvature radius. The curvature grooves 153a and 153b may be formed to extend to a minimum range in which the curvature radius may be maintained.

Each curvature groove 153a or 153b may further include a protrusion 153c. The protrusions 153c may be formed to face each other on at least part of both upper 153a and lower 153b sides of the curvature grooves 153a and 153b so that the cable 140 may be fitted into the curvature grooves 153a and 153b.

When the protrusion 153c is formed on the upper side 153a, it may extend toward the lower side 153b. When the protrusion 153c is formed on the lower side 153b, it may extend toward the upper side 153a. For example, the protrusion 153c may be a snap-fit structure. Here, the snap-fit structure means a structure in which the cable 140 is coupled to the curvature grooves 153a and 153b using elastic deformation, and then restored to its original shape after coupling. By using the snap-fit structure, the cable 140 may be fixed to the curvature grooves 153a and 153b without a separate coupling component. In addition, it may be tightly fixed even after coupling.

Each curvature groove 153a or 153b may further include a slit portion 153d. The slit portion 153d may be disposed to be adjacent to the protrusion 153c. The slit portion 153d may be a space provided to facilitate elastic deformation when the protrusion 153c is fastened thereto.

That is, the slit portion 153d provides clearance that allows the protrusion 153c to move easily, enabling smooth coupling during a fastening operation. In addition, the slit portion 153d allows for insertion and removal of the cable 140 without impact or damage, thereby offering convenience. The slit portions 153d may be formed to face each other on at least part of both the upper and lower sides of the curvature grooves.

The curvature groove 153a may further include a plate 154.

The plate 154 may extend from the side of the curvature portion 153, the body portion 152, and the anchor portion 151 to support the cable guide 150.

The plate 154 can provide stability to prevent the position and shape of the cable guide 150 from being changed, even when the head-up display apparatus 100 is exposed to external impacts or vibrations. This enhances the overall structural strength of the apparatus and helps the cable 140 maintain an appropriate curvature.

The lower case 112 may further include a hook hanger 114 to secure the cable 140 that is disposed to pass through the curvature portion 153 and face the holding portion 160.

The hook hanger 114 may be configured to secure the cable 140 between one side and the other side of the lower case 112.

An end 114a of the hook hanger 114 may be bent. That is, the end 114a of the hook hanger 114 may be configured in a U shape so that the cable 140 may be hung on the hook hanger 114. This is an example configuration but is not necessarily limited thereto.

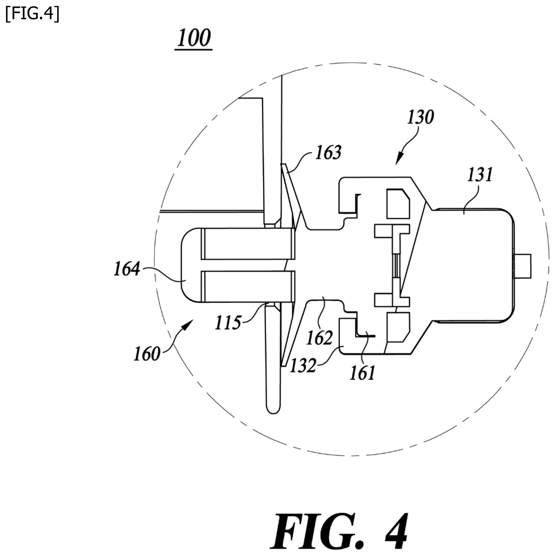

Fig. 4 is a sectional view taken along line B-B' of Fig. 1 to show a coupling relationship between the holding portion and the lower case.

Referring to Fig. 4, the head-up display apparatus 100 may further include the holding portion 160. The holding portion 160 may be disposed in one region on the other side of the lower case 112. The holding portion 160 may be configured to secure the second connector 130 to the lower case 112.

The holding portion 160 may include all or some of a sliding portion 161, an adsorber 163, and a fastener 164.

The sliding portion 161 may be configured so that the second connector 130 is slidably coupled thereto. Specifically, a sliding groove 132 may be formed on one side of a lower end of the second connector 130 so that the sliding portion 161 may slide. That is, the sliding groove 132 extending from the body portion 131 of the second connector 130 is slidably coupled to the sliding portion 161.

The sliding groove 132 may guide the sliding portion 161 to move stably and accurately reach a coupling position. Thereby, the coupling between the sliding portion 161 and the second connector 130 can reduce resistance during an installation process, making connection and separation operations easier. The body portion 162 of the holding portion 160 may extend from the sliding portion 161.

The adsorber 163 may be configured to extend from the sliding portion 161 and be adhered to the lower case 112. Specifically, the adsorber 163 may extend from the body portion 162 of the holding portion 160. For example, the adsorber 163 is located between the sliding portion 161 and the lower case 112, and may be a structure that increases a contact area to provide stable coupling.

The adsorber 163 is strongly attached to the lower case 112 through adhesive force or frictional force, thereby preventing unnecessary movement that may occur due to movement or vibration of the apparatus. For example, the adsorber 163 may be formed of an elastic material. such as rubber, to be strongly attached to the lower case 112 by using a large contact area and air pressure. Therefore, the adsorber 163 increases adhesion to the surface to provide stable coupling and prevents the apparatus from moving unnecessarily due to external vibration or movement. By using the elastic material such as rubber, the adsorber 163 may absorb vibration and maintain the coupling strength of the apparatus. This is an example configuration but is not necessarily limited thereto.

The fastener 164 may be formed to extend from the adsorber 163. The fastener 164 may be fastened through a fastening hole 115 that is formed in a region on the other side of the lower case 112.

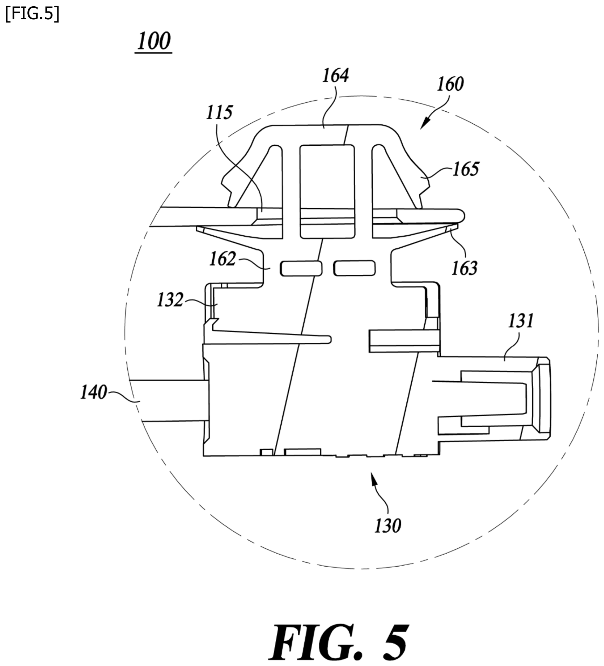

Fig. 5 is a sectional view taken along line C-C' of Fig. 1 to show a head-up display apparatus including an elastic protrusion added to the embodiment of Fig. 4. Here, descriptions overlapping with the head-up display apparatus according to the embodiment of Fig. 4 are omitted.

Referring to Fig. 5, the fastener 164 may further include an elastic protrusion 165. The elastic protrusions 165 may be formed on both sides of the fastener 164 to be fitted into the fastening hole 115.

The elastic protrusion 165 undergoes a certain elastic deformation during the fastening process, so that it may be easily inserted into the fastening hole 115. When the fastening process is completed, the elastic protrusion 165 is restored to its original shape to be stably secured to the fastening hole 115. This increases the coupling strength between the fastener 164 and the fastening hole 115, and prevents shaking or detachment in the coupled state. In addition, the elastic protrusion 165 allows the fastener 164 to be smoothly attached and detached, making maintenance work easier.

The spirit of the present embodiment is illustratively described hereinabove. It will be appreciated by those skilled in the art to which the present embodiment pertains that various modifications and alterations may be made without departing from the essential characteristics of the present embodiment. Accordingly, the present embodiments are not to limit the spirit of the present embodiment, but are to describe the spirit of the present embodiment. The technical idea of the present embodiment is not limited to these embodiments. The scope of the present embodiment should be interpreted by the following claims, and it should be interpreted that all the spirits equivalent to the following claims fall within the scope of the present embodiment.

## Claims

1. A head-up display (HUD) apparatus comprising:
a housing including a lower case that is open at a top thereof and defines an internal space, and an upper case that corresponds to the lower case to cover the top of the lower case;
a first connector forming a female structure configured to be coupled to a male connector inserted into the housing through a male-female coupling method;
a cable extending from the first connector and configured to be connected to an external device; and
a cable guide configured to surround at least a portion of the cable and to guide the cable to maintain a constant curvature.

2. The apparatus of claim 1, wherein the cable guide comprises:
a body portion configured to surround at least a portion of the first connector;
an anchor portion configured to be disposed on one side of the lower case, to extend from one side of the body portion, and be fixedly attached to the lower case; and
a curvature portion configured to maintain a radius of curvature of at least a portion of the cable extending from the first connector, and the curvature portion being formed on the other side of the body portion.

3. The apparatus of claim 2, wherein the curvature portion comprises a curvature groove formed along the radius of curvature of the cable, and wherein at least a portion of the cable is introduced into the curvature groove.

4. The apparatus of claim 3, wherein the curvature groove further comprises:
protrusions formed to face each other on at least a portion of both upper and lower sides of the curvature groove so that the cable is fitted into the curvature groove.

5. The apparatus of any one of claims 2 to 4, wherein:
the lower case further comprises:
a guide configured to be disposed on one side of the lower case to guide fixation of the anchor portion, and
the anchor portion further comprises:
a penetration hole formed on one side of the anchor portion so that the guide penetrates therethrough.

6. The apparatus of any one of claims 2 to 5, further comprising:
a plate extending from a side of the curvature portion, the body portion, and the anchor portion to support the cable guide.

7. The apparatus of any one of claims 1 to 6, further comprising:
a second connector connected to the cable and forming a male structure configured to be coupled to a female connector of the external device through a male-female coupling method; and
a holding portion configured to be disposed in one region on the other side of the lower case, and to secure the second connector to the lower case.

8. The apparatus of claim 7, wherein the holding portion comprises:
a sliding portion configured so that the second connector is slidably coupled thereto;
an adsorber configured to extend from the sliding portion and adhere to the lower case; and
a fastener extending from the adsorber and configured to be fastened through a fastening hole that is formed in one region on the other side of the lower case.

9. The apparatus of claim 8, wherein the fastener further comprises:
elastic protrusions formed on both sides of the fastener and configured to be fitted into the fastening hole.

10. The apparatus of any one of claims 1 to 9, wherein the lower case further comprises:
a hook hanger configured to secure the cable between one side and the other side of the lower case.

11. A head-up display (HUD) apparatus comprising:
a housing defining an internal space;
a first connector disposed at least partially within the housing and configured to electrically couple with a component inside the housing;
a cable extending from the first connector toward an external device; and
a cable guide attached to the housing and comprising:
a body portion surrounding at least a portion of the first connector,
an anchor portion extending from the body portion and fixedly attached to the housing, and
a curvature portion extending from the body portion, the curvature portion including a groove shaped to maintain a predetermined radius of curvature for a portion of the cable,
wherein the groove includes opposing protrusions configured to snap-fit the cable into the groove for vibration resistance.

12. The apparatus of claim 11, further comprising:
a second connector at an end of the cable opposite the first connector; and
a holding portion attached to the housing, the holding portion including a sliding portion for slidably receiving the second connector, an adherable base for adhering to the housing, and a fastener with elastic protrusions for securing the holding portion to the housing via a fastening hole.
